# EUROPÄISCHE PATENTSCHRIFT

(11) **EP 0 366 065 B1**
(45) Veröffentlichungstag und Bekanntmachung des Hinweises auf die Patenterteilung: **05.01.1994**
(21) Anmeldenummer: 89119718.8
(22) Anmeldetag: 24.10.1989
(51) Int. Cl.: A47C 23/06

(54) **Latten-Lagerkörper**
Slat support for a slatted mattress
Support pour les lattes d'un sommier

(30) Priorität: 25.10.1988 DE 8813387 U; 09.01.1989 DE 8900166 U
(43) Veröffentlichungstag der Anmeldung: 02.05.1990
(73) Patentinhaber: RÖSSLE & WANNER GMBH, 72116 Mössingen (DE)
(72) Erfinder: Glaser, Hermann, D-7406 Öschingen (DE)
(74) Vertreter: Ostertag, Reinhard

(56) Entgegenhaltungen:
- CH-A- 656 787
- DE-C- 3 423 923
- DE-U- 8 223 249
- DE-U- 8 708 160

## Beschreibung

Die Erfindung betrifft einen elastischen Lagerkörper für mindestens ein Lattenende eines Lattenrostes gemäß dem Oberbegriff des Anspruches 1.

Ein derartiger Lagerkörper ist in der DE-U-82 23 249 beschrieben. Bei ihm hat das Verbindungsfachwerk insgesamt in etwa die Form einer flachen Ellipse, und der zur oberen Ellipsenhälfte parallele Zusatzfederabschnitt ist mit seinen Enden an den unteren Bereich der durch die untere Ellipsenhälfte gebildeten unteren Tragarme angeformt.

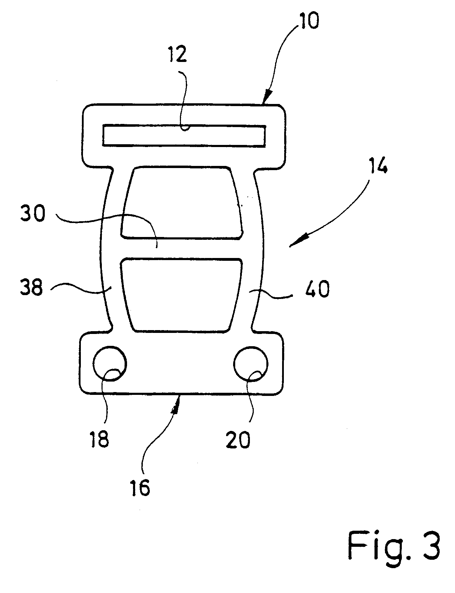

Wie aus der dortigen Figur 3 ersichtlich, neigt ein derartiger Tragkörper zu leichtem seitlichem Auswandern der zum Anbringen eines Lattenendes dienenden Formschlußmittel.

In der DE-C-34 23 923 ist ein elastischer Lagerkörper beschrieben, der ein im wesentlichen rautenförmiges Verbindungsfachwerk aufweist. Die oberen Tragarme dieses Fachwerkes haben angeformte Verlängerungen, die mit abgeschrägten Endabschnitten des Befestigungsabschnittes in Eingriff kommen, wenn das Verbindungsfachwerk stark einfedert. Das Einfedern erfolgt aber bis zum Aufblockkommen der Tragarmverlängerungen und der Endabschnitte des Befestigungsabschnittes ausschließlich unter Verformung der Tragarme. Es wird ferner vorgeschlagen, die Federkonstante des Verbindungsfachwerkes dadurch den jeweiligen Bedürfnissen des Benutzers anzupassen, daß man im Bereich der freien Eckpunkte des rautenförmigen Verbindungsfachwerkes einen umlaufenden starren Drahtbügel ansetzt.

Ferner werden bei handelsüblichen Lattenrosten Lagerkörper verwendet, welche die Lattenenden vertikal federnd und verkippbar an den Längsholmen anbringen. Diese Lagerkörper stellen an sich zufrieden, sind auch im Langzeitbetrieb störunanfällig, da sie keine gegeneinander bewegten Teile enthalten und da die gesamten Relativbewegungen durch Verformung elastischen Materiales des einstückigen Lagerkörpers erhalten werden.

Derartige Lagerkörper werden z.B. einstückig aus elastischem Kunststoffmaterial oder Gummi gespritzt. Für den Benutzer ist wichtig, daß die verschiedenen Träger des Verbindungsfachwerkes und ihre Verbindungsstellen auch eine große Anzahl von Verformungs-Wechseibelastungen überstehen. Bekannte derartige Lagerkörper haben einen verhältnismäßig kleinen vertikalen Federweg.

Durch die vorliegende Erfindung soll ein elastischer Lagerkörper gemäß dem Oberbegriff des Anspruches 1 so weitergebildet werden, daß er gleichzeitig großen vertikalen Federweg und gute Standfestigkeit aufweist, wobei in den Tragarmen des Verbindungsfachwerkes überwiegend Kompressionsbelastungen beim Einfedern des Verbindungsfachwerkes vorliegen sollen.

Diese Aufgabe ist erfindungsgemäß gelöst durch einen Lagerkörper gemäß Anspruch 1.

Bei dem erfindungsgemäßen Lagerkörper erhält man die bei eingebautem Lagerkörper in vertikaler Richtung wirkende Rückstellkraft aus zwei Beiträgen: durch die elastische Verformung der verschiedenen Fachwerksträger und durch die hinzukommende elastische Verformung des Zusatzfederabschnittes, der zusätzlich zwei gegeneinander bewegbare Punkte des Verbindungsfachwerkes verbindet. Durch Auswahl derjenigen Punkte, an denen der Zusatzfederabschnitt an die Grundstruktur des Lagerkörpers angeformt ist, ist sichergestellt, daß die Belastungen sowohl des Zusatzfederabschnittes als auch der Fachwerksträger trotz großem Gesamtfederweg des Verbindungsfachwerkes klein bleibt, wobei der Zusatzfederabschnitt auf Zug, die Fachwerksträger überwiegend auf Kompression belastet sind.

Vorteilhafte Weiterbildungen der Erfindung sind in Unteransprüchen angegeben.

Die Weiterbildung der Erfindung gemäß Anspruch 2 hat zum Vorteil, daß beim Einfedern des Tragarmfachwerkes bei vertikaler Belastung die Dehnung in den unteren Tragarmen kleiner ist da sich die oberen Tragarme wegen ihrer größeren Länge leichter komprimieren lassen. Elastisches Material ist aber im Volumen im Langzeitbetrieb ohne Ermüdungsbrüche besser komprimierbar als dehnbar. Ein Lagerkörper gemäß Anspruch 2 zeichnet sich somit durch besonders hohe Lebensdauer aus.

Mit der Weiterbildung der Erfindung gemäß Anspruch 8 wird eine gute Verkippbarkeit der beiden beabstandeten Latten-Aufnahmekammern erzielt.

Mit der Weiterbildung der Erfindung gemäß Anspruch 9 wird erreicht, daß der große vertikale Federweg des Lagerkörpers mit einer guten seitlichen Stabilität des Lagerkörpers kombiniert ist.

Bei einem Lagerkörper gemäß Anspruch 10 hat man in den Fachwerksträgern des Verbindungsfachwerkes beim Einfedern auch einen hohen Anteil an Biegebelastungen.

Bei einem Lagerkörper gemäß Anspruch 11 hat man eine verbesserte Verkippsicherheit und zugleich einen stärkeren Beitrag der Zugkräfte des Zusatzfederabschnittes zur Rückstellkraft, da die beiden Hälften des Zusatzfederabschnittes, die zu den beiden Seiten des festen Materialarmes liegen nun jeweils eine kurze unabhängige Feder darstellen.

Nachstehend wird die Erfindung anhand von Ausführungsbeispielen unter Bezugnahme auf die Zeichnung näher erläutert. In dieser zeigen:
- Figur 1:: eine Aufsicht auf einen Lagerkörper zur Verwendung in einem Lattenrost;
- Figur 2-5:: ähnliche Aufsichten auf abgewandelte Lagerkörper; und
- Figur 6:: eine in mm bemaßte Darstellung des Lagerkörpers nach Figur 5.

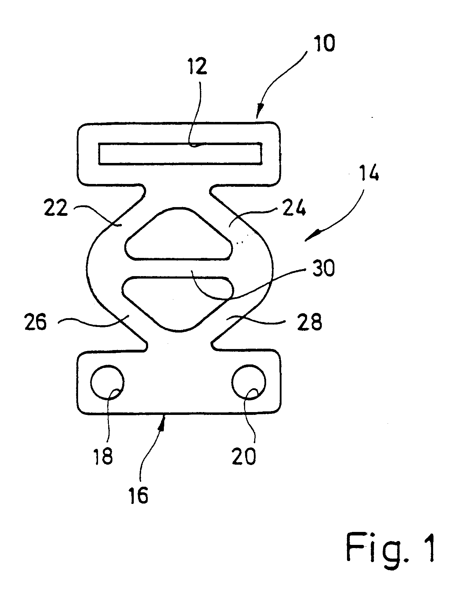

Der in Figur 1 gezeigte Lagerkörper hat einen oberen Lagerabschnitt 10 mit einer rechteckigen Ausnehmung 12, in welche das Ende einer Latte eines Lattenrostes einsetzbar ist. Der Lagerabschnitt 10 sitzt an der oberen Ecke eines rautenförmigen, insgesamt mit 14 bezeichneten Verbindungsfachwerkes, dessen untere Ecke auf der Oberseite eines Befestigungsabschnittes 16 angebracht ist.

Der Befestigungsabschnitt 16 hat zwei Ausnehmungen 18, 20, in welche Tragzapfen eines nicht gezeigten Beschlages eingreifen können, der am Längsholm des Lattenrostes befestigt ist.

Wie aus Figur 1 ersichtlich, hat das Verbindungsfachwerk 14 vier längs der Seiten einer Raute angeordnete Fachwerksträger 22, 24, 26, 28. Die freien Ecken des rautenförmigen Verbindungsfachwerkes 14 sind zusätzlich durch einen horizontalen Zusatzfederabschnitt 30 verbunden.

Beim vertikalen Einfedern des Lagerabschnittes 10 nach unten werden die Fachwerksträger 22 bis 28 auf Kompression ihres Materiales, der Zusatzfederabschnitt 30 auf Zug beansprucht. Der Beitrag der Fachwerksträger 22 bis 28 zur nach oben gerichteten Rückstellkraft auf den Lagerabschnitt 10, der mit zunehmender Einfederung aufgrund der geringeren Anstellung der Fachwerksträger 22 bis 28 weniger als linear zunimmt, wird ergänzt durch die Zugbelastung des Zusatzfederabschnittes 30, die mit der Einfederung zunimmt.

Man hat somit insgesamt einen großen Federweg für den Lagerabschnitt 10 bei nicht unzulässig großen Materialbeanspruchungen der Fachwerksträger und des Zusatzfederabschnittes sowie der Verbindungsstellen zwischen den vorgenannten Fachwerksbestandteilen.

Wie aus Figur 1 ersichtlich, kann der Lagerabschnitt 10 bezüglich des Verbindungsfachwerkes 14 auch verkippen. Eine weitere Verkippungsmöglichkeit besteht zwischen dem Verbindungsfachwerk 14 und dem Befestigungsabschnitt 16.

Damit hat man insgesamt eine in vertikaler Richtung nachgiebige und verkippbare Lagerung des Lagerabschnittes 10 und des von ihm getragenen Lattenendes bezüglich des Befestigungsabschnittes 16 und damit des Rahmens des Lattenrostes.

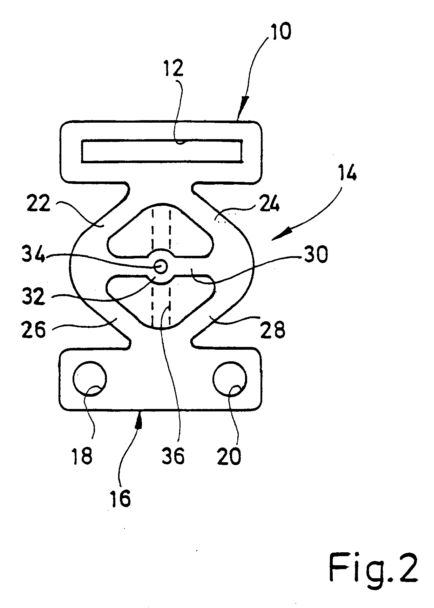

Das Ausführungsbeispiel nach Figur 2 entspricht weitgehend dem nach Figur 1; entsprechende Teile des Lagerkörpers sind wieder mit denselben Bezugszeichen versehen.

In der Mitte des Zusatzfederabschnittes 30 ist zusätzlich eine zylindrische Verdickung 32 vorgesehen, die einen aus Kunststoff gefertigten und über die Vorder- und Rückseite des Lagerkörpers vorstehenden Führungsstift 34 aufnimmt. Das vorstehende Ende des Führungsstiftes 34 kann mit einer gestrichelt angedeuteten vertikalen Nut 36 zusammenarbeiten, die in der Innenfläche eines nicht gezeigten Beschlagteiles angebracht ist, welches die in die Ausnehmungen 18, 20 eingreifenden rahmenfesten Tragzapfen hat. Alternativ kann die Nut 36 auch in einer angespritzten Rückwand des Befestigungsabschnittes 16, die mit dem Verbindungsfachwerk 14 jedoch nicht in Verbindung steht, oder direkt in der Innenfläche des Längsholmes des Lattenrahmens vorgesehen sein.

Der Führungsstift 34 sorgt so zusammen mit der Nut 36 dafür, daß das Verbindungsfachwerk 14 mit seiner einen Achse im wesentlichen vertikal ausgerichtet bleibt. Damit hat man eine verbesserte Stabilität des Lagerkörpers in horizontaler Richtung.

Beim Ausführungsbeispiel nach Figur 3 hat das Verbindungsfachwerk 14 zwei bogenförmige Fachwerksträger 38, 40, und der Zusatzfederabschnitt 30 ist an die Scheitelpunkte der Fachwerksträger 38, 40 angeformt. Verbindungsfachwerk und Materialsteg bilden somit eine tonnenförmige H-Struktur, wodurch der Lagerabschnitt 10 stärker in die Horizontale positioniert wird. Beim Einfedern des Lagerabschnittes 10 werden die Fachwerksträger 38, 40 vorwiegend auf Biegung beansprucht, der Zusatzfederabschnitt 30 wiederum Vorwiegend auf Zug. Wiederum hat man einen großen vertikalen Federweg für den Lagerabschnitt 10.

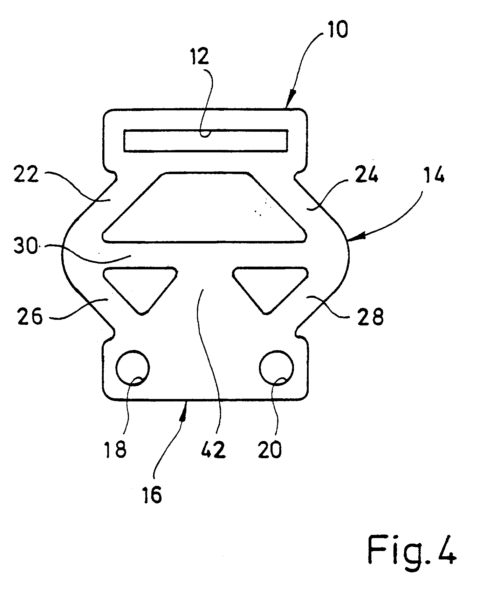

Das Ausführungsbeispiel nach Figur 4 ähnelt denjenigen nach den Figuren 1 und 2, nur haben die Enden der Fachwerksträger 22-28 größeren Abstand voneinander. Ein dicker Materialarm 42 ist an die Mitte des Befestigungsabschnittes 16 und die Mitte des Zusatzfederabschnittes 30 angeformt und hält so die Mitte des Zusatzfederabschnittes 30 beim Einfedern des Lagerkörpers über der Mitte des Befestigungsabschnittes 16. Bei Einfedern werden somit die beiden Hälften des Materialsteges 30, die zu beiden Seiten des Materialarmes 42 liegen nach unten gezogen sodaß man insgesamt eine höhere Zugbelastung erhält und damit eine vergrößerte Rückstellkraft. Außerdem stellt der Materialarm 42 einen elastischen Anschlag für den Lagerabschnitt 10 dar, der bei sehr starkem Einfedern aktiv wird.

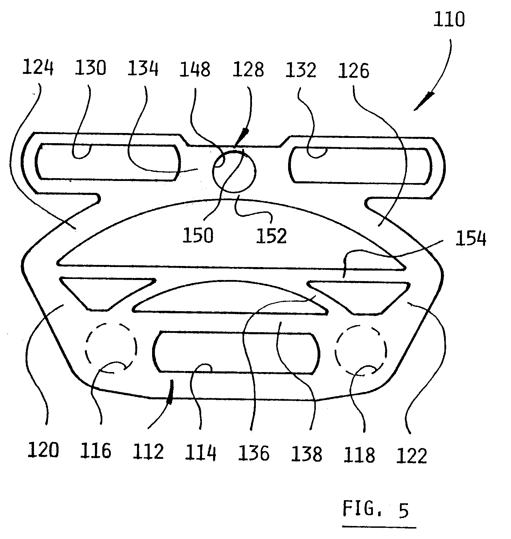

Figur 5 zeigt einen insgesamt mit 110 bezeichneten Lagerkörper mit einem unteren, horizontalen Befestigungsabschnitt 112. In der Mitte des Befestigungsabschnittes 112 ist eine Ausnehmung 114 vorgesehen, welche die Standardmaße einer Aufnahmekammer für das Ende einer Latte eines Lattenrostes aufweist. Zu beiden Seiten der Ausnehmungen 114 sind nach hinten offene Sackbohrungen 116 bzw. 118 vorgesehen. Diese dienen zur Aufnahme von rahmenfesten Zapfen (nicht gezeigt).

An die beiden seitlichen Enden des Befestigungsabschnittes 112 sind ein linker unterer Tragarm 120 sowie ein rechter unterer Tragarm 122 angeformt.

Die Außenflächen der unteren Tragarme 120, 122 sind unter einem Winkel von 55° gegen die Horizontale bzw. die Verbindungslinie der Achsen der Sackbohrungen 116, 118 angestellt. Die seitlich innenliegenden Schenkelflächen der Tragarme 120, 122 haben einen um 10° kleineren Anstellwinkel, so daß sich die Tragarme 120, 122 von ihren mit den Enden des Befestigungsabschnittes 112 verbundenen Füßen zu ihren obenliegenden freien Enden verjüngen.

An die freien Enden der unteren Tragarme 120, 122 sind freie Enden oberer Tragarme 124, 126 angeformt. Die Außenflächen der oberen Tragarme 124, 126 schließen mit der Horizontalen einen Winkel von 40° ein, ihre Innenflächen sind unter einem 15° kleineren Winkel angestellt, so daß sich die oberen Tragarme vom Verbindungspunkt mit den unteren Tragarmen zu ihren obenliegenden Füßen hin verbreitern.

Die obenliegenden Füße der oberen Tragarme 124, 126 sind an einen insgesamt mit 128 bezeichneten Lagerabschnitt angeformt. Der Lagerabschnitt 128 hat zwei horizontal beabstandete Ausnehmungen 130, 132, deren Größe wieder so bemessen ist, daß sie die Enden Von Standard-Latten aufnehmen können. Zwischen den Ausnehmungen 130, 132 liegt ein Brückenabschnitt 134.

Man erhält somit insgesamt eine Tragwerksstruktur, welche einen unteren horizontalen Träger (Befestigungsabschnitt 112), einen oberen horizontalen Träger (Lagerabschnitt 128) und ein rautenförmiges Verbindungsfachwerk (Arme 120 bis 126) aufweist.

Da der gesamte Lagerkörper 110 ein einstückiges Formteil aus elastisch nachgiebigem Material, z.B. natürlichem oder synthetischem Gummi ist, welcher typischerweise eine Shore-Härte von 60-80 aufweist, kann sich das Verbindungsfachwerk unter vertikaler Belastung verformen. Da die Enden des Befestigungsabschnittes 112 bei eingebautem Lagerkörper 110 über die in die Sackbohrungen 116, 118 eingreifendan rahmenfesten Zapfen festgelegt sind, werden bei vertikaler Belastung des Lagerabschnittes 128 durch die auf den Latten liegende Last die unteren Tragarme 120, 122 auf Zug und Biegung, die oberen Tragarme 124, 126 auf Druck und Biegung beansprucht. Bei nicht exakt vertikal ausgerichteter Belastung und bei unterschiedlicher Belastung der in den Ausnehmungen 130, 132 einsitzenden Latten kommen zu den vorgenannten Belastungen noch Biegebelastungen des Lagerabschnittes 128.

Beim vertikalen Einfedern des Verbindungsfachwerkes verkleinert sich der Winkel, der zwischen den unteren Tragarmen und den oberen Tragarmen eingeschlossen wird. Das Zusammenfalten des rautenförmigen Verbindungsfachwerkes erfolgt nun aufgrund der Rautengeometrie unter abnehmender Federkonstanten, da sich der wirksame Hebelarm für die Zugbelastung bzw. Druckbelastung der Tragarme 120 bis 126 nicht mehr stark ändert. Das rautenförmige Verbindungsfachwerk ermöglicht aber große Einfederungswege ohne unzulässig starke Volumenbelastung des elastisch verformbaren Materiales, aus welchem der Lagerkörper 110 hergestellt ist.

Wie aus Figur 5 ersichtlich, bilden die innenliegenden Flächen der oberen Tragarme 124, 126 einen Kreisbogen.

Um eine noch bessere Verkippbarkeit der beiden jeweils ein Lattenende aufnehmenden Hälften des Lagerabschnittes 128 gegeneinander zu gewahrleisten, ist in der Mitte des Brückenabschnittes 134 eine Bohrung 148 vorgesehen, welche über und unter sich nur verhältnismäßig schmale Stege 150, 152 stehen läßt.

Ein die Fußabschnitte der Tragarme 120, 122 verbindende Zusatzfederabschnitt 136 ist mit seinem Scheitel an einen horizontalen Zusatzfederabschnitt 154 angeformt, der die freien Ecken des durch die Tragarme 120 bis 126 gebildeten rautenförmigen Verbindungsfachwerkes miteinander verbindet.

Federt der in Figur 5 gezeigte Lagerkörper ein, so ist die Mitte des horizontalen Zusatzfederabschnittes 154 durch den gebogenen Zusatzfederabschnitt 136 abgestützt. Der Zusatzfederabschnitt 154 erzeugt somit eine stärkere Rückstellkraft als ein die freien Eckpunkte des Verbindungsfachwerkes frei verbindender Zusatzfederabschnitt. Durch die Abstützung des Zusatzfederabschnittes 154 wird das Material des gebogenen Zusatzfedarabschnittes 136 auf Kompression und Knickung beansprucht. Man hat also keine harte sondern eine elastische Abstützung der Mitte des Zusatzfederabschnittes 154. Auf diese Weise läßt sich die Federcharakteristik des Lagerkörpers gemäß Figur 13 insgesamt fein auf eine gewünschte Progression einstellen.

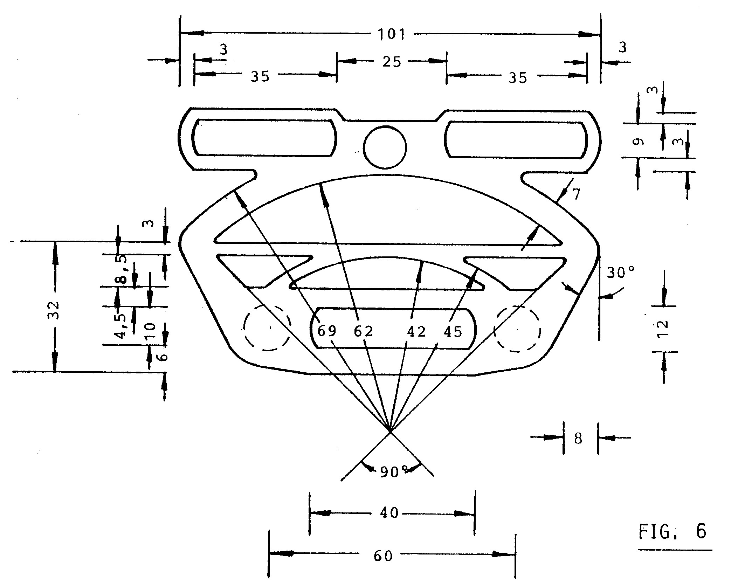

Die Figur 6 ist eine in mm bemaßte Darstellung der Figur 5. Sie gilt in Verbindung mit einer für eine Shore-Härte des für den Lagerkörper verwendeten elastischen Materiales von etwa 60 bis etwa 80, insbesondere 70.

## Patentansprüche

1. Elastischer einstückiger Lagerkörper für mindestens ein Lattenende eines Lattenrostes, mit einem Befestigungsabschnitt (16; 112), der mit Formschlußmitteln (18,20; 116, 118) zur Anbringung am Längsholm des Lattenrostes versehen ist, mit mindestens einem Lagerabschnitt (10; 128), der mit Formschlußmitteln (12; 130, 32) zur Anbringung mindestens eines Lattenendes versehen ist, und mit einem elastisch verformbaren, zur Mittelebene des Lagerkörpers symmetrischen Verbindungsfachwerk, über welches der Lagerabschnitt (10; 128) auf dem Befestigungsabschnitt (10; 112) angeordnet ist, wobei das Verbindungsfachwerk aufweist: untere Tragarme (26, 28; 120, 122), die vom Befestigungsabschnitt (16; 112) nach außen und oben verlaufen, und obere Tragarme (22, 24; 124, 126), die von den Enden der unteren Tragarme (26, 28; 120, 122) schräg nach innen und oben zum Lagerabschnitt (10; 128) verlaufen, so daß die Tragarme (22 bis 28; 120 bis 126) insgesamt ein im wesentlichen rautenförmigen oder tonnenförmigen Querschnitt aufweisendes Volumen umgrenzen, und wobei mindestens ein Zusatzfederäbschnitt (30; 154) im Inneren des durch die Tragarme (22 bis 28; 120 bis 126) begrenzten Volumens liegt, der zwei gegeneinander bewegbare Punkte des Verbindungsfachwerkes verbindet, dadurch gekennzeichnet, daß die mit dem horizontal verlaufend ausgebildeten Zusatzfederabschnitt (30; 154) verbundenen Punkte des Verbindungsfachwerkes (14) die freien Verbindungspunkte der rautenförmig angeordneten Tragarme (22 bis 28; 120 bis 126) sind, deren weitere Eckpunkte mit dem Befestigungsabschnitt (16; 112) bzw. dem Lageräbschnitt (10; 128) verbunden sind, und im Zusatzfederabschnitt (30; 154) beim Einfedern Zugkräfte wirken, die anteilig zur Erhöhung der Rückstellkraft beitragen.

2. Elastischer einstückiger Lagerkörper nach Anspruch 1, dadurch gekennzeichnet, daß die unteren Tragarme (26, 28; 120, 122) kürzer sind als die oberen Tragarme (22, 24; 124, 126).

3. Elastischer einstückiger Lagerkörper nach Anspruch 1 oder 2, dadurch gekennzeichnet, daß die Außenflächen der unteren Tragarme (26, 28; 120, 122) mit der Ebene des gestreckten und zwei beabstandete Formschlußmittel (18, 20; 116, 118) aufweisenden Befestigungsabschnittes (16; 112) einen Winkel von betragsmäßig 50 bis 60°, vorzugsweise etwa 55° einschließen.

4. Elastischer einstückiger Lagerkörper nach Anspruch 3, gekennzeichnet durch eine zwischen den beabstandeten Formschlußmitteln (18, 20; 116, 118) vorgesehene Ausnehmung (114) zur Aufnahme eines weiteren Lattenendes.

5. Elastischer einstückiger Lagerkörper nach einem der Ansprüche 1 bis 4, dadurch gekennzeichnet, daß die Außenflächen der oberen Tragarme (22, 24; 124, 126) unter einem Winkel von betragsmäßig etwa 35 bis 50°, vorzugsweise etwa 45° zur Ebene des Befestigungsabschnittes (16; 112) angeordnet sind.

6. Elastischer einstückiger Lagerkörper nach einem der Ansprüche 1 bis 5, dadurch gekennzeichnet, daß die Dicke der Tragarme (22 bis 26; 120 bis 126) vom dem Befestigungsabschnitt (16; 112) bzw. dem Lagerabschnitt (10; 128) benachbarten Fußende zum Verbindungsende hin abnimmt.

7. Elastischer einstückiger Lagerkörper nach einem der Ansprüche 1 bis 6, wobei der Lagerabschnitt (128) zwei beabstandete Ausnehmungen (130, 132) für jeweils ein Lattenende aufweist, dadurch gekennzeichnet, daß die Fußenden der oberen Tragarme (124, 126) im wesentlichen die der Tragkörpermittelebene benachbarten Hälften der die Ausnehmungen (130, 132) unten begrenzenden Wände des Lagerabschnittes (128) überdecken.

8. Elastischer einstückiger Lagerkörper nach Anspruch 7, gekennzeichnet durch eine zwischen den beabstandeten Ausnehmungen (130, 132) liegende Schwächungsbohrung (148).

9. Elastischer einstückiger Lagerkörper nach einem der Ansprüche 1 bis 8, gekennzeichnet durch auf dem Zusatzfederabschnitt (30) angebrachte Führungsmittel (34).

10. Elastischer einstückiger Lagerkörper nach Anspruch 9, dadurch gekennzeichnet, daß die mit den Zusatzfederabschnitt (30) verbundenen Punkte des Verbindungsfachwerkes die Scheitelpunkte zweier gebogener beabstandeter Fachwerksträger (38, 40) sind, deren eine Enden mit dem Befestigungsabschnitt (16) und deren zweite Enden mit dem Lagerabschnitt (10) verbunden sind.

11. Elastischer einstückiger Lagerkörper nach einem der Ansprüche 1 bis 6, dadurch gekennzeichnet, daß die Mitte des Zusatzfederabschnittes (30) über einen festen Materialarm (42) mit der Mitte des Befestigungsabschnittes (16) verbunden ist.

## Claims

1. Elastic one-piece bearing member for at least one lath end of a lath grid, with a fastening portion (16; 112), which is provided with positive locking means (18, 20; 116, 118) for attachment to the longitudinal beam of the lath grid, with at least one bearing portion (10; 128), which is provided with positive locking means (12; 130, 32) for attaching at least one lath end, and with an elastically deformable connecting framework, which is symmetrical about the centre plane of the bearing member and via which the bearing portion (10; 128) is disposed on the fastening portion (10; 112), the connecting framework comprising: lower support arms (26, 28; 120, 122), which extend outwards and upwards from the fastening portion (16; 112), and upper support arms (22, 24; 124, 126), which extend obliquely inwards and upwards from the ends of the lower support arms (26, 28; 120, 122) to the bearing portion (10; 128), so that the support arms (22 to 28; 120 to 126) as a whole define a volume of an essentially rhombic or barrel-shaped cross section, and at least one auxiliary resilient portion (30; 154) lying inside the volume defined by the support arms (22 to 28; 120 to 126), which portion connects two points of the connecting framework which can move relative to one another, characterised in that the points of the connecting framework (14) which are connected to the horizontally extending auxiliary resilient portion (30; 154) are the free connecting points of the support arms (22 to 28; 120 to 126) disposed in the form of a rhombus, the other corner points of which are connected to the fastening portion (16; 112) and the bearing portion (10; 128), and tensile forces act in the auxiliary resilient portion (30; 154) during spring deflection and help to increase the restoring force.

2. Elastic one-piece bearing member according to claim 1, characterised in that the lower support arms (26, 28; 120, 122) are shorter than the upper support arms (22, 24; 124, 126).

3. Elastic one-piece bearing member according to claim 1 or 2, characterised in that the outer faces of the lower support arms (26, 28; 120, 122) form an angle of 50 to 60°, preferably approximately 55°, with the plane of the straight fastening portion (16; 112) comprising two spaced positive locking means (18, 20; 116, 118).

4. Elastic one-piece bearing member according to claim 3, characterised by a recess (114), which is provided between the spaced positive locking means (18, 20; 116, 118), to hold another lath end.

5. Elastic one-piece bearing member according to one of claims 1 to 4, characterised in that the outer faces of the upper support arms (22, 24; 124, 126) are disposed at an angle of approximately 35 to 50°, preferably approximately 45°, to the plane of the fastening portion (16; 112).

6. Elastic one-piece bearing member according to one of claims 1 to 5, characterised in that the thickness of the support arms (22 to 26; 120 to 126) decreases from the foot end which adjoins the fastening portion (16; 112) and the bearing portion (10; 128) towards the connection end.

7. Elastic one-piece bearing member according to one of claims 1 to 6, the bearing portion (128) comprising two spaced recesses (130, 132) for a respective lath end, characterised in that the foot ends of the upper support arms (124, 126) essentially overlap the halves of the walls of the bearing portion (128) which adjoin the centre plane of the bearing member, which walls define the recesses (130, 132) at the bottom.

8. Elastic one-piece bearing member according to claim 7, characterised by a weakening bore (148) lying between the spaced recesses (130, 132).

9. Elastic one-piece bearing member according to one of claims 1 to 8, characterised by guide means (34) attached to the auxiliary resilient portion (30).

10. Elastic one-piece bearing member according to claim 9, characterised in that the points of the connecting framework which are connected to the auxiliary resilient portion (30) are the vertices of two curved, spaced framework supports (38, 40), one end of which is in each case connected to the fastening portion (16) and the second end to the bearing portion (10).

11. Elastic one-piece bearing member according to one of claims 1 to 6, characterised in that the centre of the auxiliary resilient portion (30) is connected via a solid material arm (42) to the centre of the fastening portion (16).

## Revendications

1. Corps de support élastique d'une pièce pour au moins une extrémité de latte d'un grillage à lattes avec une section de fixation (16; 112), qui est pourvu d'éléments d'emboîtement (18, 20; 116, 118) pour le montage sur le longeron du grillage à lattes avec au moins une section de support (10, 128) qui est pourvue d'éléments d'emboîtement (112, 130, 132) pour le montage d'au moins une extrémité de latte et avec un élément d'assemblage élastiquement déformable symétrique par rapport au plan médian du corps de support et par lequel la section de support (10, 128) est montée sur la section de fixation (10, 112), dans lequel l'élément d'assemblage comporte : des bras de support inférieurs (26, 28, 120, 122) qui partent de la section de fixation (16, 112) vers le haut et vers l'extérieur et des bras de support supérieurs (22, 24, 124, 126), qui partent obliquement vers l'intérieur et vers le haut, vers la section de support (10, 128) depuis les extrémités de bras de support inférieurs (26, 28, 120, 122), si bien que les bras de support (22, 28, 120 à 126) délimitent ensemble un volume présentant essentiellement une section en forme de losange ou de tonneau, et dans lequel au moins une section élastique supplémentaire (30, 154) se trouve à l'intérieur du volume délimité par les bras de support (22 à 28, 120 à 126) qui assemblent deux points de l'élément d'assemblage pouvant se déplacer l'un par rapport à l'autre caractérisé en ce que les points de l'élément d'assemblage (14) assemblés à la section élastique supplémentaire (30, 154) disposée horizontalement sont les points d'assemblage libres des bras de support disposés en forme de losange (22 à 28, 120 à 126) dont les autres points d'angle sont assemblés à la section de fixation (16, 112) ou à la section de support (10, 128) et provoquent des forces de traction dans la section élastique supplémentaire (30, 154) en cas de déformation élastique, de manière à contribuer partiellement à l'augmentation de la force de rappel.

2. Corps de support élastique en une pièce selon la revendication 1, caractérisé en ce que les bras de support inférieurs (26, 28, 120, 122) sont plus courts que les bras de support supérieurs (22, 24, 124, 126).

3. Corps de support élastique en une pièce selon la revendication 1 ou 2, caractérise en ce que les surfaces extérieures des bras de support inférieurs (26, 28, 120, 122) forment avec le plan de la section de fixation (16, 112) en extension et formant deux éléments d'emboîtement à distance l'un de l'autre (18, 20, 116, 118), un angle de 50 à 60°C et égal de préférence à environ 55°.

4. Corps de support élastique en une pièce selon la revendication 3, caractérisé par une cavité (114) prévue entre les éléments d'emboîtement situés à distance l'un de l'autre (18, 20, 116, 118) et destinés à recevoir une autre extrémité de latte.

5. Corps de support élastique en une pièce selon l'une des revendications 1 à 4, caractérisé en ce que les surfaces extérieures des bras de support supérieurs (22, 24, 124, 126) sont disposés suivant un angle compris entre environ 35 et 50° et égal de préférence environ 45° par rapport au plan de la section de fixation (16, 112).

6. Corps de support élastique en une pièce selon l'une des revendications 1 à 5, caractérisé en ce que l'épaisseur des bras de support (22 à 26, 120 à 126) diminue depuis les extrémités de pieds voisines de la section de fixation (16, 112) ou de la section de support (10, 128) vers l'extrémité d'assemblage.

7. Corps de support élastique en une pièce selon l'une des revendications 1 à 6, dans lequel la section de support (128) comporte deux cavités situées à distance l'une de l'autre (130, 132) destinées à recevoir chacune une extrémité de latte, caractérisée en ce que les extrémités de pied, des bras de support supérieurs (124, 126) couvrent essentiellement les moitiés voisines du plan moyen du corps de support des parois de la section de support (128), délimitant dans le bas les cavités (130, 132).

8. Corps de support élastique en une pièce selon la revendication 7, caractérisé par un trou d'affaiblissement (148) situé entre les cavités (130, 132) situées à distance l'une de l'autre.

9. Corps de support élastique en une pièce selon l'une des revendications 1 à 8, caractérisé par un moyen de guidage (34) monté sur une section élastique supplémentaire (30).

10. Corps de support élastique en une pièce selon la revendication 9, caractérisé en ce que les points de l'élément d'assemblage assemblés à la section élastique supplémentaire (30) sont les points supérieurs de deux supports d'élément d'assemblage incurvés et écartés l'un de l'autre (38, 40) dont une extrémité est assemblée à la section de fixation (16) et dont la deuxième extrémité est assemblée à la section de support (10).

11. Corps de support élastique en une pièce selon l'une des revendications 1 à 6, caractérisé en ce que le milieu de la section élastique supplémentaire (30) est assemblé par un bras en matériau fixe (42) au milieu de la section de fixation (16).
